# EUROPÄISCHE PATENTSCHRIFT

(11) **EP 3 815 534 B1**
(45) Veröffentlichungstag und Bekanntmachung des Hinweises auf die Patenterteilung: **19.10.2022**
(21) Anmeldenummer: 19206012.7
(22) Anmeldetag: 29.10.2019
(51) Int. Cl.: A21C 3/02

(54) **VERFAHREN ZUM BETREIBEN EINER TEIGBEARBEITUNGSMASCHINE SOWIE TEIGBEARBEITUNGSMASCHINE**
SPINNING MACHINE AND METHOD FOR OPERATING SAME
PROCÉDÉ DE FONCTIONNEMENT D'UNE MACHINE DE TRAITEMENT DE LA PÂTE AINSI QUE MACHINE DE TRAITEMENT DE LA PÂTE

(43) Veröffentlichungstag der Anmeldung: 05.05.2021
(73) Patentinhaber: Rondo Burgdorf AG, 3400 Burgdorf (CH)
(72) Erfinder: Saez, Carlos, 4528 Zuchwil (CH); Weissbach, Alexander, 4542 Luterbach (CH); Besson, Marc, 3400 Burgdorf (CH)
(74) Vertreter: Keller Schneider Patent- und Markenanwälte AG

(56) Entgegenhaltungen:
- WO-A1-2018/049454
- JP-A- 2016 116 462
- US-A- 4 398 877
- US-A- 4 849 234
- US-A- 5 720 990
- US-A1- 2006 034 988

## Beschreibung

### Technisches Gebiet

Die Erfindung betrifft ein Verfahren zum Betreiben einer Teigbearbeitungsmaschine sowie eine Teigbearbeitungsmaschine, wobei der zeitliche Verlauf des Drehmoments von Servomotoren, welche als Antrieb für Elemente der Teigbearbeitungsmaschine eingesetzt werden, gemessen und zur Berechnung von Betriebsparametern oder Teigparametern verwendet werden.

### Stand der Technik

Teigbearbeitungsmaschinen werden heutzutage in Bäckerbetrieben zur Herstellung unterschiedlicher Teigformen oder Backwaren eingesetzt. Beispielsweise werden zum Ausrollen von Teigmassen zu einem Teigstück mit einer bestimmten Dicke Ausrollmaschinen oder Teigbandanlagen eingesetzt oder es werden mit Schneidwalzen ausgerüstete Schneidmaschinen zum Zuschneiden eines Teigstücks in Teiglinge mit einer bestimmten Form verwendet.

Bei kleineren Maschinen erfolgen die Kontrolle der Arbeitsschritte sowie die Einstellung der Parameter, wie beispielsweise die Dicke des Walzenspaltes, in der Regel manuell. Hierfür ist es erforderlich, dass der Operateur der Maschine über entsprechende Erfahrung im Umgang mit der Maschine und im Umgang mit Teig hat. Bei grösseren Maschinen können Teigparameter sowie Betriebsparameter der Maschine mittels zusätzlicher Sensoren, wie Kameras oder Infrarotsensoren überwacht werden. Dies gestaltet jedoch den Bau sowie den Unterhalt der Maschinen aufwändiger, was letztendlich zu höheren Kosten führt.

Die US 2006/0034988 A1 offenbart beispielsweise eine Teigausrollmaschine mit welcher eine erhöhte Kontrolle der Teigparameter möglich ist. Vor dem Ausrollen kann die Feuchtigkeit des Teigs per Infrarot gemessen werden, wobei entweder durch eine Bedienperson oder durch eine Steuerung bei einem vorgelagerten Mischer der Feuchtigkeitsgehalt anhand der Messung nachgestellt werden kann. Die durch den vorgelagerten Mischer in den Teig eingeleitete Arbeit wird durch Messen des Strombedarfs des Mischers oder durch dessen Drehmoment bestimmt. Ferner kann auch die beim Ausrollen in den Teig eingeleitete Arbeit von der Stromaufnahme des Walzenantriebs abgeleitet werden, wobei die Stromaufnahme aufgezeichnet und durch einen Bediener der Maschine zum Einstellen des Walzenspaltes verwendet wird.

Die WO 2018049454 A1 offenbart eine rotierende Teigformmaschine mit einer rotierenden Formwalze sowie einem Entnahmeband für geformte Teiglinge. Um ein gleichmässiges Entnehmen der geformten Teiglinge aus der Formwalze zu gewährleisten wird das Entnahmeband durch einen Motor angetrieben, der mit einem konstanten Drehmoment oder der mit einem Drehmoment innerhalb eines vorbestimmten Bereichs angetrieben wird. Dadurch wird eine definierte und konstante Spannung im Entnahmeband erzeugt. Das Drehmoment oder der Drehmomentbereich kann automatisch oder manuell verändert werden, insbesondere anhand von Daten eines Sensors. Der Sensor kann das geleistete Drehmoment des Motors, die Spannung des Entnahmebandes oder die Form der Teiglinge messen. Die Formwalze wird durch einen Motor mit einer konstanten Geschwindigkeit angetrieben. Der Motor des Entnahmebandes ist vorzugsweise ein Servomotor mit Drehmomentregelung.

Die JP 2016-116462 beschreibt eine Maschine zur Herstellung von kugelförmigen Teigwaren. Die Maschine umfasst vier Formwalzen, zwischen denen eine Teigkugel geformt wird. Die dritte sowie die vierte Formwalze werden gegen die erste bzw. zweite Formwalze mit einem vorbestimmten Druck gedrückt.

Die US 5,720,990 beschreibt eine Teigausrollmaschine mit einem Ablösedraht, der das Ablösen des Teigs von den Walzen erleichtert. Der Ablösedraht wird mittels angetriebenen Spulen kontinuierlich über die Oberfläche einer Walze gezogen, um Brüche durch Abnützungsstellen zu verhindern. Die Aufrollspule wird durch einen Motor mit konstantem Drehmoment angetrieben, während die Abrollspule mit einem Motor mit konstanter Drehgeschwindigkeit angetrieben wird.

Die US 4,398,877 offenbart eine Teigausrollmaschine, bei welcher Änderungen der Leistungsaufnahme eines Antriebsmotors für eine Walze herangezogen wird, um Änderungen in der zugeführten Menge an Teig zu kompensieren. Da bei einer gleichmässigen Drehgeschwindigkeit der Walze die Leistungsaufnahme vom geleisteten Drehmoment abhängt, wird die Kompensation effektiv anhand des Drehmoments vollzogen. Durch Vorsehen einer Überwachungsschaltung kann bei einer Änderung der Leistungsaufnahme auf einen Wert, der ausserhalb eines Toleranzbereichs liegt, ein Alarm aktiviert werden, so dass ein Bediener der Maschine entsprechende Korrekturen vornehmen kann.

Die US 4,849,234 beschreibt eine Maschine zur Teigbearbeitung, welche unter anderem eine Ausrolleinheit aufweist. Die Drehgeschwindigkeit der Walzen der Ausrolleinheit wird anhand von Sensordaten, welche die Zugkraft im Teig messen, durch eine Steuerung angepasst, so dass ein konstanter Durchsatz des Teigs durch die Ausrolleinheit erzielt werden kann. Die Maschine weist ferner Sensoren auf, welche die Drehgeschwindigkeit der unterschiedlichen Walzen sowie der Position des Teigs an unterschiedlichen Orten messen können.

### Darstellung der Erfindung

Aufgabe der Erfindung ist es, ein dem eingangs genannten technischen Gebiet zugehörendes Verfahren sowie eine Teigbearbeitungsmaschine zu schaffen, welche eine automatische Bestimmung von Betriebsparametern sowie von Parametern des bearbeiteten Teiges ermöglicht und welche einen möglichst einfachen Aufbau aufweist.

Die Lösung der Aufgabe ist durch die Merkmale des Anspruchs 1 definiert. Die Erfindung betrifft ein Verfahren zum Betreiben einer Teigbearbeitungsmaschine, welche über ein erstes Förderband sowie über eine erste Walze verfügt, wobei zwischen der ersten Walze sowie dem ersten Förderband oder einer zweiten Walze ein verstellbarer Walzenspalt gebildet wird, und wobei das erste Förderband durch einen ersten Servomotor sowie die erste Walze und allenfalls die zweite Walze durch einen zweiten Servomotor angetrieben wird. Die Steuerungseinheit misst das Drehmoment des ersten und zweiten Servomotors kontinuierlich. In einem weiteren Schritt berechnet die Steuerungseinheit anhand des zeitlichen Verlaufs des gemessenen Drehmoments des ersten oder des zweiten Servomotors oder anhand eines Vergleichs des zeitlichen Verlaufs der gemessenen Drehmomente des ersten und des zweiten Servomotors mindestens einen Betriebsparameter der Teigbearbeitungsmaschine und/oder mindestens einen Parameter eines mit der Teigbearbeitungsmaschine bearbeiteten Teigs.

Die Aufgabe wird ferner durch eine Teigbearbeitungsmaschine gemäss Anspruch 10 gelöst. Die erfindungsgemässe Teigbearbeitungsmaschine hat ein erstes Förderband sowie eine erste Walze, wobei zwischen der ersten Walze sowie dem ersten Förderband oder einer zweiten Walze ein verstellbarer Walzenspalt gebildet wird. Das erste Förderband wird durch einen ersten Servomotor sowie die erste Walze und allenfalls die zweite Walze durch einen zweiten Servomotor angetrieben. Die Teigbearbeitungsmaschine umfasst ferner eine Steuerungseinheit, welche derart ausgestaltet ist, dass diese für den ersten und für den zweiten Servomotor kontinuierlich das Drehmoment misst und anhand des zeitlichen Verlaufs des gemessenen Drehmoments des ersten oder des zweiten Servomotors oder anhand eines Vergleichs des zeitlichen Verlaufs der gemessenen Verläufe der Drehmomente des ersten und zweiten Servomotors den mindestens einen Betriebsparameter der Teigbearbeitungsmaschine und/oder den mindestens einen Parameter eines mit der Teigbearbeitungsmaschine bearbeiteten Teigs berechnet.

Durch die Messung des Drehmoments der Servomotoren und einer anschliessenden Analyse von deren Verläufen kann ohne Verwendung von zusätzlichen Sensoren mindestens ein Betriebsparameter der Teigbearbeitungsmaschine und/oder mindestens ein Parameter des Teigs berechnet werden. Der mindestens eine Betriebsparameter und/oder der mindestens eine Parameter des Teigs kann beispielsweise für einen Regelkreis der Teigbearbeitungsmaschine verwendet werden. Hierdurch kann eine möglichst schonende Bearbeitung des Teigs erzielt werden sowie ein Reissen eines Teigbandes bei dessen Bearbeitung verhindert werden. Ferner kann ein Wellenschlag des Teigs durch ein Aufstauen vor der ersten Walze verhindert werden.

In der folgenden Anmeldung wird unter dem Begriff Teigbearbeitungsmaschine eine Maschine verstanden, mit welcher eine Teigmasse oder ein Teigstück bearbeitet werden kann. Eine Teigbearbeitungsmaschine kann beispielsweise eine Ausrollmaschine sein, mit welcher sich eine Teigmasse zu einem Teigstück mit einer definierten Dicke bearbeiten lässt. Ein weiteres Beispiel für eine Teigbearbeitungsmaschine ist eine Schneidmaschine, bei welcher mittels einer Schneidwalze ein Teigstück in Teiglinge mit einer definierten Form geschnitten wird.

In der vorliegenden Anmeldung wird unter dem Begriff Teig sowohl eine ungeformte Teigmasse als auch ein oder mehrere Teigstücke mit einer bestimmten und gleichmässigen Dicke verstanden. Dem Fachmann auf dem Gebiet sind unterschiedliche Teigarten bekannt, welche als Teigmasse oder als Teigstücke mit dem erfindungsgemässen Verfahren bzw. der erfindungsgemässen Teigbearbeitungsmaschine bearbeitet werden können. Dies ist beispielsweise Mürbeteig, laminierter Teig, Blätterteig, Hefeteig, etc. Ferner können auch andere teigartige Massen, wie beispielsweise Marzipan oder Rollfondant (Sugarpaste) mit dem erfindungsgemässen Verfahren bzw. der erfindungsgemässen Teigbearbeitungsmaschine bearbeitet werden.

Mit dem erfindungsgemässen Verfahren beziehungsweise der erfindungsgemässen Teigbearbeitungsmaschine lässt sich eine Teigmasse oder ein Teigstück mit einer Mehrzahl an aufeinanderfolgenden Bearbeitungsschritten auf eine vorbestimmte Bearbeitungsart bearbeiten. Beispielsweise kann eine Teigmasse zu einem Teigstück mit einer definierten Dicke gewalzt oder ein Teigstück in definierte Teiglinge mit einer bestimmten Form geschnitten werden, sofern die erste Walze eine Schneidwalze ist.

Das erste Förderband umfasst vorzugsweise ein Endlosband aus einem lebensmitteltauglichen Material, insbesondere einem Kunststoff. Das erste Förderband wird über mindestens zwei Rollen umgelenkt. Demnach weist das erste Förderband eine obere Bandstrecke sowie eine untere Bandstrecke auf. Auf der oberen Bandstrecke können die Teigmasse, das Teigstück und/oder die Teiglinge aufliegen um mit dem ersten Förderband befördert zu werden. Die Oberfläche des ersten Förderbandes ist vorzugsweise glatt. Alternativ kann die Oberfläche des ersten Förderbandes jedoch auch über eine Struktur verfügen, welche zu einem höheren Reibungskoeffizienten zwischen dem ersten Förderband und darauf liegendem Teig führt. Als Struktur kann das erste Förderband beispielsweise über Noppen verfügen.

Die erste Walze ist vorzugsweise zylindrisch ausgestaltet. Weiter bevorzugt weist die Walze eine glatte Oberfläche auf, welche insbesondere aus einem Material besteht, an welchem Teig nicht gut haftet und welche lebensmitteltauglich ist. Alternativ kann die erste Walze jedoch auch bombiert oder als doppelter Konus ausgestaltet sein. Ferner kann die Oberfläche der ersten Walze über von der Oberfläche abstehende Klingen verfügen, mit denen Teig in eine bestimmt Form geschnitten werden kann. Die erste Walze kann demnach als Schneidwalze ausgestaltet sein.

Die erste Walze ist vorzugsweise oberhalb des ersten Förderbandes angeordnet. Vorzugsweise ist die erste Walze oberhalb der oberen Bandstrecke des ersten Förderbandes angeordnet. Die erste Walze ist vorzugsweise in vertikaler Richtung linear verschiebbar gelagert, so dass zwischen dem ersten Förderband bzw. dessen oberen Bandstrecke und der ersten Walze ein Walzenspalt mit variabler Höhe gebildet wird. Die Teigmasse beziehungsweise das Teigstück wird durch das erste Förderband in diesen Walzenspalt gefördert, wo dieses anschliessend durch die Walze gewalzt oder - sofern die erste Walze eine Schneidwalze ist - in vordefinierte Formen geschnitten wird.

Die erste Walze wird vorzugsweise über einen dritten Servomotor linear verschoben. Vorzugsweise misst die Steuerungseinheit das Drehmoment dieses dritten Motors ebenfalls kontinuierlich.

In einer alternativen, bevorzugten Ausführungsform verfügt die Teigbearbeitungsmaschine über eine zweite Walze. Die zweite Walze ist vorzugsweise in vertikaler Richtung unterhalb der ersten Walze angeordnet. Vorzugsweise ist die zweite Walze dabei derart angeordnet, dass deren Oberfläche am obersten Scheitelpunkt in einer Ebene mit der Oberfläche des ersten Förderbandes, insbesondere der oberen Bandstrecke, liegt. Die zweite Walze ist vorzugsweise fix, d.h. nicht linear verschiebbar, während die erste Walze in vertikaler Richtung linear verschiebbar angeordnet ist. Zwischen der ersten Walze und der zweiten Walze wird der Walzenspalt gebildet, dessen Höhe durch Verschieben der ersten Walze variiert werden kann. Bei dieser Ausführungsform wird der Teig mit dem ersten Förderband zum Walzenspalt zwischen der ersten Walze und der zweiten Walze hin gefördert und anschliessend im Walzenspalt gewalzt bzw. geschnitten. Bei dieser Ausführungsform werden sowohl die erste Walze wie auch die zweite Walze beide mit dem zweiten Servomotor angetrieben, wobei beide Walzen über ein entsprechendes Getriebe untereinander bzw. mit dem zweiten Servomotor in Wirkverbindung stehen. Als Getriebe kann beispielsweise ein Zahnradgetriebe oder Bandgetriebe eingesetzt werden. Alternativ kann die zweite Walze auch durch einen zusätzlichen Servomotor angetrieben werden. Vorzugsweise ist die Drehrichtung der zweiten Walze der Drehrichtung der ersten Walze entgegengesetzt. Unter Drehrichtung wird in der vorliegenden Anmeldung die Richtung der Drehung um die Längsachse der jeweiligen Walze verstanden.

Zur Messung des Drehmoments eines Servomotors verwendet die Steuerungseinheit die Stromaufnahme des jeweiligen Servomotors. Über entsprechende Umrechnungstabellen beziehungsweise Eichkurven kann anhand einer gemessenen Stromaufnahme eines Servomotors das durch den Servomotor geleistete Drehmoment genau berechnet werden.

Die Steuerungseinheit misst vorzugsweise nicht nur die Drehmomente der Servomotoren, sondern steuert zusätzlich die Servomotoren an. Das heisst, dass mittels der Steuerungseinheit beispielsweise die Geschwindigkeit des ersten Förderbandes sowie dessen Drehrichtung, oder die Drehgeschwindigkeit und Drehrichtung der ersten Walze gesteuert werden können.

Beim erfindungsgemässen Verfahren beziehungsweise der erfindungsgemässen Teigbearbeitungsmaschine misst die Steuerungseinheit nicht nur kontinuierlich das Drehmoment eines jeden Servomotors, sondern zeichnet für jeden Servomotor die gemessenen Drehmomente im zeitlichen Verlauf auf. Die gemessenen Drehmomente der Servomotoren werden vorzugsweise in einem flüchtigen Speicher der Steuerungseinheit gespeichert, insbesondere über einen vordefinierten Zeitraum. Der vordefinierte Zeitraum kann beispielsweise eine vordefinierte Zeiteinheit, wie zum Beispiel 1, 2, 3 oder mehr Minuten sein. Alternativ kann der vordefinierte Zeitraum auch den gesamten Zeitraum umfassen, in welchem die Steuerungseinheit ein bestimmtes Steuerungsprogramm abarbeitet.

Vorzugsweise verfügt die Teigbearbeitungsmaschine ferner über einen Thermometer, mit welchem die Temperatur des Teigs gemessen werden kann, wobei die Steuerungseinheit die Temperatur des Teigs kontinuierlich ausliest und zur Berechnung des mindestens einen Betriebsparameters und/oder des mindestens einen Parameters des Teigs heranzieht. Die Temperatur des Teigs hat nämlich einen grossen Einfluss auf die Parameter des Teigs, insbesondere was dessen Brüchigkeit und Härte anbelangt. Das Auslesen der Temperatur ermöglicht so ein möglichst schonendes Bearbeiten des Teigs.

Vorzugsweise verfügt die Teigbearbeitungsmaschine über weitere Sensoren, wie z.B. einen Sensor zur Messung der Feuchtigkeit des Teigs oder einen Sensor zur Ermittlung der Oberflächenbeschaffenheit des Teigs verfügen. Die Messdaten dieser Sensoren werden vorzugsweise durch die Steuerungseinheit zur Berechnung des mindestens einen Betriebsparameter und/oder des mindestens einen Parameters des Teigs herangezogen.

Die Steuerungseinheit umfasst vorzugsweise mindestens einen Mikrocontroller oder Computer, auf welchem Berechnungen durchgeführt werden können. Ferner umfasst die Steuerungseinheit vorzugsweise über Eingabemittel, mit denen ein Benutzer Daten eingeben kann, wie beispielsweise die Art des zu bearbeitenden Teigs. Ferner umfasst die Steuerungseinheit Ausgabemittel, mit denen vorzugsweise Daten in menschenlesbarer Form, beispielsweise in der Form eines dargestellten Textes oder von dargestellten Bildern oder Piktogrammen, ausgegeben werden können. Die Steuerungseinheit verfügt insbesondere über einen Touchscreen Bildschirm. Ferner verfügt die Steuerungseinheit vorzugsweise über einen nicht-flüchtigen Speicher, in welchem Daten abgespeichert werden können. Im nicht-flüchtigen Speicher werden insbesondere Daten sowie Steuerungsprogramme abgespeichert.

Ein Steuerungsprogramm enthält vorzugsweise eine sequentielle Abfolge von Steuerungsbefehlen für die einzelnen Elemente der Teigbearbeitungsmaschine, insbesondere für die Servomotoren, welche nötig sind, um den Teig entsprechend zu bearbeiten. Beispielsweise kann ein Steuerungsprogramm eine zeitliche Abfolge von Änderungen der Drehrichtung des ersten und des zweiten sowie allenfalls des dritten Servomotors beinhalten.

Die Teigbearbeitungsmaschine verfügt vorzugsweise über zwei Walzen, zwischen denen der Walzenspalt gebildet ist. Die beiden Walzen können relativ zueinander mittels eines dritten Servomotors linear verfahren werden, um den Walzenspalt zu verändern. Die Steuerungseinheit misst den zeitlichen Verlauf des Drehmoments des dritten Servomotors. Anhand dieses zeitlichen Verlaufs oder eines Vergleichs des zeitlichen Verlaufs des Drehmoments mit dem zeitlichen Verlauf des Drehmoments eines weiteren Servomotors berechnet die Steuerungseinheit den mindestens einen Betriebsparameter der Teigbearbeitungsmaschine und/oder den mindestens ein Parameter des mit der Teigbearbeitungsmaschine bearbeiteten Teigs.

Wie bereits weiter oben beschrieben wird, ist vorzugsweise die erste Walze linear verschiebbar gelagert, während die zweite Walze, welche in vertikaler Richtung unterhalb der ersten Walze liegt, fix angeordnet ist. Bei gewissen, speziellen Ausführungsformen kann jedoch auch die zweite Walze linear verschiebbar in vertikaler Richtung unterhalb der fix angeordneten ersten Walze angeordnet sein. In einer weiteren alternativen Ausführungsform können jedoch auch beide Walzen linear verschiebbar angeordnet sein, wobei beide Walzen mittels des dritten Servomotors linear verschoben werden können. Hierzu verfügt die Teigbearbeitungsmaschine vorzugsweise über ein entsprechendes Getriebe, welches das Verstellen beider Walzen mittels des dritten Servomotors ermöglicht.

Sofern die Teigbearbeitungsmaschine über einen dritten Servomotor verfügt, ist die Steuerungseinheit vorzugsweise derart ausgestaltet, dass diese das Drehmoment des dritten Servomotors kontinuierlich messen und anhand des zeitlichen Verlaufs des Drehmoments oder eines Vergleichs des zeitlichen Verlaufs des Drehmoments des dritten Servomotors mit dem zeitlichen Verlauf des Drehmoments eines der weiteren Servomotoren den mindestens einen Betriebsparameter der Teigbearbeitungsmaschine und/oder den mindestens ein Parameter des mit der Teigbearbeitungsmaschine bearbeiteten Teigs berechnen kann.

Die Teigbearbeitungsmaschine verfügt vorzugsweise über ein zweites Förderband, welches von einem vierten Servomotor angetrieben wird. Bei dieser Ausführungsform erstreckt sich das erste Förderband von einem ersten Ende der Teigbearbeitungsmaschine bis zur ersten Walze. Das zweite Förderband erstreckt sich von der ersten Walze zu einem zweiten Ende der Teigbearbeitungsmaschine. wobei die Steuerungseinheit das Drehmoment des vierten Servomotors kontinuierlich misst. Anhand des zeitlichen Verlaufs des Drehmoments des vierten Servomotors oder eines Vergleichs dieses zeitlichen Verlaufs des Drehmoments des vierten Servomotors mit dem zeitlichen Verlauf des Drehmoments des ersten Servomotors und/oder des zweiten Servomotors und/oder allenfalls des dritten Servomotors berechnet die Steuerungseinheit den mindestens einen Betriebsparameter der Teigbearbeitungsmaschine und/oder den mindestens einen Parameter des mit der Teigbearbeitungsmaschine bearbeiteten Teigs.

So kann ein Teig auf das erste Förderband gelegt, von diesem in Richtung der zwei Walzen gefördert, anschliessend zwischen den zwei Walzen durch den Walzenspalt hindurch und auf das zweite Förderband gefördert werden. Anschliessend kann bei Bedarf mittels einer Umkehrung der Drehrichtung des ersten, zweiten und vierten Servomotors der Teig in umgekehrter Richtung wiederum durch den Walzenspalt und auf das erste Förderband gefördert werden. Hierbei kann vorzugsweise die Drehgeschwindigkeit des ersten und des vierten Servomotors unterschiedlich sein, so dass der Teig mit einer höheren Geschwindigkeit aus dem Walzenspalt gezogen wird, als dieser in den Walzenspalt hinein gefördert wird.

Dementsprechend ist die Steuerungseinheit der Teigbearbeitungsmaschine bei dieser Ausführungsform vorzugsweise derart ausgestaltet, dass diese das Drehmoment des vierten Servomotors kontinuierlich messen kann sowie anhand des zeitlichen Verlaufs des Drehmoments des vierten Servomotors oder eines Vergleichs des zeitlichen Verlaufs des Drehmoments des vierten Servomotors mit dem zeitlichen Verlauf des Drehmoments des ersten Servomotors und/oder des zweiten Servomotors und/oder des dritten Servomotors den mindestens einen Betriebsparameter der Teigbearbeitungsmaschine und/oder den mindestens einen Parameter des mit der Teigbearbeitungsmaschine bearbeiteten Teigs berechnen kann.

Die Teigbearbeitungsmaschine verfügt vorzugsweise über ein zusätzliches Element zur Bearbeitung von Teig, welches über einen zusätzlichen Servomotor angetrieben wird. Die Steuerungseinheit misst das Drehmoment des zusätzlichen Servomotors kontinuierlich. Anhand des zeitlichen Verlaufs des Drehmoments des zusätzlichen Servomotors oder eines Vergleichs des zeitlichen Verlaufs des Drehmoments des zusätzlichen Servomotors mit dem zeitlichen Verlauf des Drehmoments des ersten und/oder zweiten sowie allenfalls dritten und/oder vierten Servomotors berechnet die Steuerungseinheit den mindestens einen Betriebsparameter der Teigbearbeitungsmaschine und/oder den mindestens einen Parameter des mit der Teigbearbeitungsmaschine bearbeiteten Teigs.

Mit dem mindestens einen zusätzlichen Element lässt sich durch das erfindungsgemässe Verfahren beziehungsweise durch die erfindungsgemässe Teigbearbeitungsmaschine ein Teig einem weiteren Bearbeitungsschritt unterziehen. Beispielsweise kann die Teigbearbeitungsmaschine als zusätzliches Element eine Vorrichtung zum Auftragen einer Füllung auf Teigstücke, eine Vorrichtung zum Aufrollen von Teig, eine Streuvorrichtung für Mehl oder eine Schneidvorrichtung aufweisen.

Dementsprechend ist bei dieser Ausführungsform die Steuerungseinheit der Teigbearbeitungsmaschine vorzugsweise derart ausgestaltet, dass diese das Drehmoment des mindestens einen zusätzlichen Servomotors kontinuierlich messen und anhand des zeitlichen Verlaufs des Drehmoments des mindestens einen zusätzlichen Servomotors oder eines Vergleichs des zeitlichen Verlaufs des Drehmoments des mindestens einen zusätzlichen Servomotors mit dem zeitlichen Verlauf des Drehmoments des ersten und/oder zweiten sowie allenfalls dritten und/oder vierten Servomotors den mindestens einen Betriebsparameter der Teigbearbeitungsmaschine und/oder den mindestens einen Parameter des mit der Teigbearbeitungsmaschine bearbeiteten Teigs berechnen kann.

Vorzugsweise steuert die Steuerungseinheit anhand des berechneten mindestens einen Betriebsparameters und/oder anhand des mindestens einen berechneten Parameters des durch die Teigbearbeitungsmaschine bearbeiteten Teigs mindestens einen der Servomotoren an, um den mindestens einen Betriebsparameter und/oder den mindestens einen Parameters des Teigs zu verändern.

Die Steuerungseinheiten steuert mindestens einen der Servomotoren vorzugsweise derart an, dass der mindestens eine Betriebsparameter und/oder der mindestens eine Parameter des Teigs auf einen vordefinierten Wert geändert werden.

Vorzugsweise wird mindestens ein Servomotor derart angesteuert, dass mindesten ein Betriebsparameter derart geändert wird, dass die Änderung einem Schritt in einem vordefinierten und in der Steuerungseinheit abgespeicherten Steuerungsprogramm entspricht, beispielsweise zum Verarbeiten einer Teigmasse zu einem Teigstück mit einer bestimmten Dicke. Das heisst, dass die Steuerungseinheit anhand des mindestens einen berechneten Betriebsparameters und/oder des mindestens einen berechneten Parameters des Teigs selbstständig erkennt, ob der nächste Schritt im abgespeicherten Steuerungsprogramm ausgeführt werden kann. Insbesondere bevorzugt wird durch die Steuerungseinheit anhand mindestens eines berechneten Parameters des bearbeiteten Teigs mindestens ein Servomotor derart angesteuert, dass sich mindestens ein Betriebsparameter der Teigbearbeitungsmaschine verändert.

Alternativ kann die Steuerungseinheit jedoch auch anhand mindestens eines berechneten Parameters des Teigs mittels in der Steuerungseinheit abgespeicherten Referenztabellen berechnen, in welchem Masse mindestens einer der Servomotoren angesteuert werden muss, so dass der mindestens eine Parameter des Teigs auf einen bestimmten Wert verändert wird, insbesondere auf einen vorbestimmten Sollwert. Das heisst, dass die Steuerungseinheit selbständig den mindestens einen Parameter des Teigs auf einen vorbestimmten Wert, insbesondere auf einen vorbestimmten Sollwert, während der Bearbeitung des Teigs korrigieren kann.

Insbesondere steuert die Steuerungseinheit in diesem Fall mindestens einen Servomotor derart an, dass mindestens ein Betriebsparameter der Teigbearbeitungsmaschine derart verändert wird, dass durch die Bearbeitung des Teigs durch die Teigmaschine mit dem veränderten Betriebsparameter letztendlich der mindestens eine Parameter des Teigs auf den vorbestimmten Wert geändert wird. Dies kann insbesondere durch einen Vergleich mit Referenztabellen erzielt werden. Eine derartige Referenztabelle enthält vorzugsweise für die Art des durch die Teigbearbeitungsmaschine bearbeiteten Teigs Informationen darüber, wie sich ein bestimmter Parameter des Teigs bei einer bestimmten Veränderung eines bestimmten Betriebsparameters der Teigbearbeitungsmaschine ändert. Zum Beispiel kann eine derartige Referenztabelle Informationen darüber enthalten, wie sich die Dicke des Teigs verändert, wenn der Walzenspalt um eine bestimmte Distanz verkleinert wird.

Die Referenztabellen sind vorzugsweise in einem nicht flüchtigen Speicher der Steuerungseinheit abgespeichert. Die Referenztabellen werden vorzugsweise durch die Steuerungseinheit selbst erzeugt, das heisst, dass die Steuerungseinheit in einer bevorzugten Ausführungsform den Einfluss einer Veränderung eines Betriebsparameters der Teigbearbeitungsmaschine auf einen Parameter des Teigs in einer Referenztabelle abspeichert. Die Steuerungseinheit ist daher vorzugsweise in der Lage, ein selbstständiges maschinelles Lernen durchzuführen.

Vorzugsweise werden bei den Referenztabellen zusätzlich die Temperatur, der Fettgehalt und/oder die Art des verarbeiteten Teigs vermerkt, da diese beiden Eigenschaften einen grossen Einfluss auf das Verhalten des Teigs haben.

Vorzugsweise vergleicht die Steuerungseinheit den zeitlichen Verlauf des gemessenen Drehmoments von einem oder mehreren der Servomotoren mit mindestens einem in der Steuerungseinheit abgespeicherten Referenzverlauf des Drehmoments. Die Steuerungseinheit berechnet dann anhand von Abweichungen des zeitlichen Verlaufs des gemessenen Drehmoments des einen oder der mehreren Servomotoren mit dem mindestens einen Referenzverlauf des Drehmoments den mindestens einen Betriebsparameter der Teigbearbeitungsmaschine und/oder den mindestens einen Parameter des mit der Teigbearbeitungsmaschine bearbeiteten Teigs.

Der mindestens eine Referenzverlauf des Drehmoments ist vorzugsweise in einem nicht-flüchtigen Speicher der Steuerungseinheit abgespeichert. Der mindestens eine Referenzverlauf ist für eine bestimmte Bearbeitungsart des Teigs sowie für einen der Servomotoren spezifisch. Daher ist vorzugsweise für jede Bearbeitungsart des Teigs, die mit dem erfindungsgemässen Verfahren beziehungsweise mit der erfindungsgemässen Teigbearbeitungsmaschine durchgeführt werden kann, mindestens ein Referenzverlauf gespeichert. Vorzugsweise ist für jeden der Servomotoren ein Referenzverlauf gespeichert. Sofern die Teigbearbeitungsmaschine über einen Thermometer zur Bestimmung der Temperatur des Teigs verfügt, können auch temperaturspezifische Referenzverläufe in der Steuerungseinheit gespeichert sein.

Vorzugsweise stoppt die Steuerungseinheit die Bearbeitung des Teigs, sofern eine zu grosse Abweichung des zeitlichen Verlaufs des gemessenen Drehmoments des einen oder der mehreren Servomotoren mit dem mindestens einen Referenzverlauf des Drehmoments vorliegt und gibt eine entsprechende Warnung, beispielsweise in der Form eine Warntons, ab.

Zeigt beispielsweise der zeitliche Verlauf des Drehmoments des zweiten Servomotors einen höheren Wert an als dessen Referenzverlauf, kann dies ein Hinweis darauf sein, dass ein falscher Teig, der fester ist als der zu bearbeitende Teig auf das erste Förderband oder allenfalls auf das zweite Förderband aufgelegt wurde oder dass der Teig eine zu tiefe Temperatur aufweist und daher zu fest ist. Ferner kann dies auch auf die Bildung eines Wellenschlags auf dem Teig vor dem Walzenspalt hindeuten, d.h. dass sich der Teig vor dem Walzenspalt aufstaut, da dessen Zuführgeschwindigkeit in den Walzenspalt zu hoch ist. Die Steuerungseinheit kann in einem solchen Fall vorzugsweise den zweiten Servomotor derart ansteuern, dass der Walzenspalt grösser wird oder den ersten Servomotor und allenfalls den vierten Servomotor derart ansteuern, dass die Geschwindigkeit des ersten Förderbandes sowie allenfalls des zweiten Förderbandes verkleinert wird.

Bevorzugt weist die Teigbearbeitungsmaschine zwei Förderbänder auf. In einer Ausführungsform des erfindungsgemässen Verfahrens werden das erste und das zweite Förderband durch den ersten und vierten Servomotor in Richtung der mindestens einen Walze angetrieben. Die Steuerungseinheit berechnet durch Vergleich des zeitlichen Verlaufs des Drehmoments des ersten Servomotors sowie des vierten Servomotors als Betriebsparameter, ob sich ein Teig auf dem ersten oder auf dem zweiten Förderband befindet.

Das Gewicht eines auf einem Förderband befindlichen Teigs wird das Drehmoment des für den Antrieb dieses Förderbandes zuständigen Servomotors beeinflussen. Daher lässt sich durch einen Vergleich der zeitlichen Verläufe der gemessenen Drehmomente des ersten Servomotors sowie des vierten Servomotors feststellen, ob ein Teig auf dem ersten bzw. dem zweiten Förderband aufliegt. Typischerweise wird auf demjenigen Förderband ein Teig aufliegen, an welchem ein höheres Drehmoment, d.h. ein höherer Strom anliegt.

Diese Ausführungsform ist insbesondere bei Ausrollmaschinen von Vorteil, da dadurch zuverlässig verhindert werden kann, dass beim Start der Teigbearbeitung ein auf einem Förderband aufliegender Teig wegen einer falsch eingestellten Laufrichtung der Förderbänder auf den Boden fällt.

Nachdem die Steuerungseinheit erkannt hat, auf welchem Förderband der Teig aufliegt, steuert die Steuerungseinheit den Servomotor, der das Förderband antreibt, auf welchem der Teig nicht aufliegt, sowie den zweiten Servomotor derart an, dass dieses Band sowie die erste Walze und allenfalls die zweite Walze in eine Richtung drehen, die das Durchziehen des Teigs durch den Walzenspalt ermöglicht.

Ein wesentlicher Vorteil dieser Ausführungsform ist, dass beim Start einer Bearbeitung eines Teigs durch einen Benutzer lediglich ein Startbefehl eingegeben werden muss. Im Vergleich hierzu muss bei Ausrollmaschinen aus dem Stand der Technik stets noch die richtige Laufrichtung der Förderbänder sowie der Walzen durch den Benutzer ausgewählt werden, was eine nicht unerhebliche Fehlerquelle darstellt.

Ferner kann die Steuerungseinheit durch einen Vergleich der zeitlichen Verläufe des ersten Servomotors sowie des vierten Servomotors als Betriebsparameter kontinuierlich berechnen, auf welchem Förderband sich der Teig befindet, wobei diese Information beispielsweise angezeigt werden kann.

Sofern beim Durchziehen des Teigs durch den Walzenspalt die Verläufe der Drehmomente des ersten Servomotors sowie des vierten Servomotors nicht kongruent sind, kann dies ein Hinweis darauf sein, dass der Teig nach dem Walzenspalt durch unterschiedliche Geschwindigkeiten der beiden Förderbänder und/oder der ersten Walze sowie allenfalls der zweiten Walze in die Länge gezogen wird, was Spannungen im Teig produziert, die sich negativ auf dessen Qualität auswirken. Die Steuerungseinheit kann vorzugsweise in einem solchen Fall die Drehgeschwindigkeit des ersten, zweiten und/oder vierten Servomotors drosseln.

Vorzugsweise berechnet die Steuerungseinheit anhand des zeitlichen Verlaufs des Drehmoments des ersten Servomotors oder allenfalls des vierten Servomotors mittels Vergleich mit in der Steuerungseinheit abgespeicherten Referenzverläufen das Gewicht eines auf dem ersten Förderband oder allenfalls auf dem zweiten Förderband befindlichen Teigs.

Die Referenzverläufe stellen hierbei zeitliche Verläufe des Drehmoments des ersten oder allenfalls vierten Servomotors bei Aufliegen eines Teigs mit einem bestimmten Gewicht dar. Dadurch kann die Steuerungseinheit das Gewicht eines auf dem ersten Förderband oder allenfalls auf dem zweiten Förderband aufliegenden Teigs sehr zuverlässig und ohne zusätzliche Wägevorrichtung bestimmen.

Vorzugsweise berechnet die Steuerungseinheit anhand des zeitlichen Verlaufs des Drehmoments des zweiten Servomotors als Parameter des Teigs dessen Klebrigkeit.

Die Berechnung der Klebrigkeit erfolgt anhand des zeitlichen Verlaufs des Drehmomentes des zweiten Servomotors, der die erste Walze und allenfalls die zweite Walze antreibt. Ein Ansteigen des Drehmoments signalisiert eine zunehmende Klebrigkeit des Teigs. Bei Überschreiten eines vordefinierten Schwellenwertes kann die Steuerungseinheit beispielsweise eine Streuvorrichtung für Mehl ansteuern, so dass diese eine definierte Menge an Mehl auf den Teig streut, womit dessen Klebrigkeit auf der Oberfläche reduziert werden kann. Registriert die Steuerungseinheit in der Folge keine Abnahme des Drehmoments so gibt die Steuerungseinheit vorzugsweise ein Warnsignal aus, da dies ein Hinweis darauf ist, dass in der Streuvorrichtung kein Mehl mehr vorhanden ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht einer ersten Ausführungsform erfindungsgemässen Teigbearbeitungsmaschine;
- Fig. 2: eine schematische Seitenansicht einer zweiten Ausführungsform erfindungsgemässen Teigbearbeitungsmaschine.

Grundsätzlich sind in den Figuren gleiche Teile mit gleichen Bezugszeichen versehen.

### Wege zur Ausführung der Erfindung

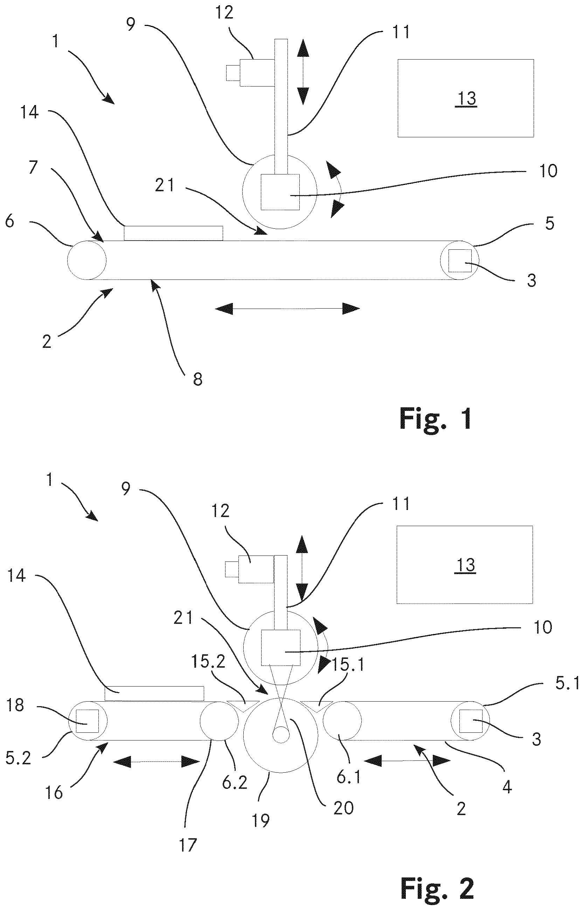

Die Fig. 1 zeigt eine schematische Seitenansicht einer ersten Ausführungsform einer erfindungsgemässen Teigbearbeitungsmaschine 1. Die Teigbearbeitungsmaschine 1 ist für die Durchführung des erfindungsgemässen Verfahrens geeignet.

Die Teigbearbeitungsmaschine 1 verfügt über ein erstes Förderband 2. Das erste Förderband 2 umfasst ein erstes Endlosband 4, welches über eine erste Umlenkrolle 5 sowie über eine zweite Umlenkrolle 6 umgelenkt wird. Dadurch weist das erste Förderband 2 eine obere Bandstrecke 7 sowie eine untere Bandstrecke 8 auf. Das erste Förderband 2 wird durch einen ersten Servomotor 3 angetrieben (durch Doppelpfeil angedeutet). Bei der in der Fig. 1 gezeigten Ausführungsform steht der erste Servomotor 3 direkt mit der ersten Umlenkrolle 5 in Verbindung, um diese anzutreiben. Es ist jedoch auch möglich, den ersten Servomotor 3 in einem Abstand zur ersten Umlenkrolle 5 anzuordnen, wobei in diesem Fall der erste Servomotor 3 über ein Getriebe mit der ersten Umlenkrolle 5 in Wirkverbindung steht.

Die Teigbearbeitungsmaschine 1 umfasst ferner eine erste Walze 9, welche über einen zweiten Servomotor 10 rotierend angetrieben wird (durch Doppelpfeil angedeutet). Bei der in der Fig. 1 gezeigten Ausführungsform steht der zweite Servomotor 10 direkt mit der ersten Walze 9 in Verbindung, um diese anzutreiben. Es ist jedoch auch möglich, den zweiten Servomotor 10 in einem Abstand zur ersten Walze 9 anzuordnen, wobei in diesem Fall der zweite Servomotor 10 über ein Getriebe mit der ersten Walze 9 in Wirkverbindung steht.

Die erste Walze 9 ist über eine Spindel 11 mittels eines dritten Servomotors 12 linear in vertikaler Richtung verfahrbar (durch Doppelpfeil angedeutet). Dadurch lässt sich ein zwischen der ersten Walze 9 und dem ersten Förderband 2 liegender Walzenspalt 21 vergrössern oder verkleinern. Ein auf dem ersten Förderband 2 befindlicher Teig 14 kann mittels des ersten Förderbandes 2 durch den Walzenspalt 21 gezogen werden, um den Teig zu walzen oder - sofern die erste Walze 9 eine Schneidwalze ist - diesen in Teiglinge mit einer spezifischen Form zu schneiden.

Ferner verfügt die Teigbearbeitungsmaschine 1 über eine Steuerungseinheit 13, welche die Drehmomente des ersten Servomotors 3, des zweiten Servomotors 10 sowie des dritten Servomotors 12 der Teigbearbeitungsmaschine 1 kontinuierlich misst. Aus den zeitlichen Verläufen dieser Drehmomente berechnet die Steuerungseinheit 13 mindestens einen Betriebsparameter der Teigbearbeitungsmaschine 1 und/oder mindestens einen Parameter des durch die Teigbearbeitungsmaschine 1 bearbeiteten Teigs 14. Dementsprechend ist die Steuerungseinheit 13 derart ausgestaltet, dass diese das Drehmoment des ersten Servomotors 3, des zweiten Servomotors 10 sowie des dritten Servomotors 12 kontinuierlich messen und daraus den mindestens einen Parameter berechnen kann. Die Messung des Drehmoments des ersten Servomotors 3, des zweiten Servomotors 10 sowie des dritten Servomotors 12 erfolgt am einfachsten über eine Messung ihrer Stromaufnahme.

Die Steuerungseinheit 13 steuert ferner den ersten Servomotor 3, den zweiten Servomotor 10 sowie den dritten Servomotor 12 der Teigbearbeitungsmaschine 1. Die Steuerungseinheit kann somit die Laufrichten des ersten Förderbandes 2 sowie der ersten Walze 9 sowie deren Drehgeschwindigkeit ändern, indem die Steuerungseinheit 13 dem jeweiligen Servomotor 3, 10 entsprechende Steuerungssignale übermittelt.

Die Fig. 2 zeigt eine zweite Ausführungsform einer erfindungsgemässen Teigbearbeitungsmaschine 1, welche zum Durchführen eines erfindungsgemässen Verfahrens geeignet ist, in einer schematischen Darstellung.

Im Unterschied zur Ausführungsform der Teigbearbeitungsmaschine gemäss Fig. 1 verfügt die Teigbearbeitungsmaschine 1 gemäss der in der Fig. 2 gezeigten Ausführungsform über ein zweites Förderband 16 sowie über eine zweite Walze 19. Die zweite Walze 19 ist vertikal unterhalb der ersten Walze 9 angeordnet. Zwischen der ersten Walze 9 und der zweiten Walze 19 ist der Walzenspalt 21 gebildet. Das erste Förderband 2 sowie das zweite Förderband 16 liegen in Längsrichtung der Teigbearbeitungsmaschine 1 beidseits der ersten Walze 9 und der zweiten Walze 19.

Das zweite Förderband 16 wird mit einem vierten Servomotor 18 angetrieben. Bei der in der Fig. 2 gezeigten Ausführungsform steht der vierte Servomotor 18 direkt mit der ersten Umlenkrolle 5.2 des zweiten Förderbandes 16 in Verbindung, um diese anzutreiben. Es ist jedoch auch möglich, den vierten Servomotor 18 in einem Abstand zur ersten Umlenkrolle 5.2 des zweiten Förderbandes 16 anzuordnen, wobei in diesem Fall der vierte Servomotor 18 über ein Getriebe mit der ersten Umlenkrolle 5.2 des zweiten Förderbandes 16 in Wirkverbindung steht. Das zweite Förderband 16 verfügt über ein zweites Endlosband 17.

Bei der in der Fig. 2 gezeigten Ausführungsform verfügen beide Förderbänder 2, 16 über jeweils eine erste Umlenkrolle 5.1, 5.2 sowie über eine zweite Umlenkrolle 6.1, 6.2 Jeweils die erste Umlenkrolle 5.1, 5.2 des ersten Förderbandes 2 bzw. des zweiten Förderbandes 16 steht in Wirkverbindung mit dem ersten Servomotor 3 bzw. dem vierten Servomotor 18, damit die beiden Förderbänder 2, 16 angetrieben werden können. Im Zwischenraum zwischen dem Walzenpaar 9, 19 und dem ersten Förderband 2 bzw. dem zweiten Förderband 16 ist jeweils ein Abstreifer 15.1, 15.2 angeordnet.

Sowohl die erste Walze 9 wie auch die zweite Walze 19 werden durch den zweiten Servomotor 10 angetrieben. Hierzu sind die erste Walze 9 sowie die zweite Walze 19 über ein Getriebe 20, welches bei der gezeigten Ausführungsform als Bandgetriebe ausgestaltet ist, verbunden.

Wie bei der Ausführungsform gemäss Fig. 1 verfügt auch die Ausführungsform der Teigbearbeitungsmaschine gemäss Fig. 2 über eine Steuerungseinheit 13, welche die Drehmomente der des ersten Servomotors 3, des zweiten Servomotors 10, des dritten Servomotors 12 sowie des vierten Servomotors 18 der Teigbearbeitungsmaschine 1 kontinuierlich misst. Aus dem zeitlichen Verlauf des Drehmoments des ersten Servomotors 3, des zweiten Servomotors 10, des dritten Servomotors 12 oder des vierten Servomotors 18 oder eines Vergleichs zwei oder mehr zeitlichen Verläufen der Drehmomente des ersten Servomotors 3, des zweiten Servomotors 10, des dritten Servomotors 12 oder des vierten Servomotors 18 berechnet die Steuerungseinheit 13 den mindestens einen Betriebsparameter der Teigbearbeitungsmaschine 1 und/oder den mindestens einen Parameter des durch die Teigbearbeitungsmaschine 1 bearbeiteten Teigs 14. Dementsprechend ist die Steuerungseinheit 13 derart ausgestaltet, dass diese das Drehmoment des ersten Servomotors 3, des zweiten Servomotors 10, des dritten Servomotors 12 sowie des vierten Servomotors 18 kontinuierlich messen und daraus den mindestens einen Parameter berechnen kann. Die Messung des Drehmoments des ersten Servomotors 3, des zweiten Servomotors 10, des dritten Servomotors 12 sowie des vierten Servomotors 18 erfolgt am einfachsten über eine Messung ihrer jeweiligen Stromaufnahme

## Patentansprüche

1. Verfahren zum Betreiben einer Teigbearbeitungsmaschine (1), welche über ein erstes Förderband (2) sowie über eine erste Walze (9) verfügt, wobei zwischen der ersten Walze (9) sowie dem ersten Förderband (2) oder einer zweiten Walze (19) ein verstellbarer Walzenspalt (21) gebildet wird, und wobei das erste Förderband (2) durch einen ersten Servomotor (3) sowie die erste Walze (9) und allenfalls die zweite Walze (19) durch einen zweiten Servomotor (10) angetrieben wird, **dadurch gekennzeichnet, dass** eine Steuerungseinheit (13) für den ersten Servomotor (3) und für den zweiten Servomotor (10) kontinuierlich das Drehmoment misst, und gekennzeichnet in dass die Steuerungseinheit (13) anhand des zeitlichen Verlaufs des gemessenen Drehmoments des ersten Servomotors (3) oder des zweiten Servomotors (10) oder eines Vergleichs des zeitlichen Verlaufs der gemessenen Drehmomente des ersten Servomotors (3) sowie des zweiten Servomotors (10) mindestens einen Betriebsparameter der Teigbearbeitungsmaschine (1) und/oder mindestens einen Parameter eines mit der Teigbearbeitungsmaschine (1) bearbeiteten Teigs (14) berechnet.

2. Verfahren gemäss Anspruch 1, **dadurch gekennzeichnet, dass** die Teigbearbeitungsmaschine (1) über zwei Walzen (9, 19) verfügt, zwischen denen der Walzenspalt (21) gebildet ist, wobei die beiden Walzen (9, 19) relativ zueinander mittels eines dritten Servomotors (12) linear verfahren werden können, um den Walzenspalt (21) zu verändern und wobei die Steuerungseinheit (13) den zeitlichen Verlauf des Drehmoments des dritten Servomotors (12) kontinuierlich misst und anhand des zeitlichen Verlaufs des Drehmoments des dritten Servomotors (12) oder eines Vergleichs des zeitlichen Verlaufs des Drehmoments des dritten Servomotors (12) mit dem zeitlichen Verlauf des Drehmoments des ersten Servomotors (3) und/oder zweiten Servomotors (10) den mindestens einen Betriebsparameter der Teigbearbeitungsmaschine (1) und/oder den mindestens einen Parameter des mit der Teigbearbeitungsmaschine (1) bearbeiteten Teigs (14) berechnet.

3. Verfahren gemäss Anspruch 2, **dadurch gekennzeichnet, dass** die Teigbearbeitungsmaschine (1) über ein zweites Förderband (16) verfügt, welches von einem vierten Servomotor (18) angetrieben wird, wobei sich das erste Förderband (2) von einem ersten Ende der Teigbearbeitungsmaschine (1) bis zur ersten Walze (9) erstreckt und sich das zweite Förderband (16) von der ersten Walze (9) zu einem zweiten Ende der Teigbearbeitungsmaschine (1) erstreckt, und wobei die Steuerungseinheit (13) das Drehmoment des vierten Servomotors (18) kontinuierlich misst und anhand des zeitlichen Verlaufs des Drehmoments des vierten Servomotors (18) oder eines Vergleichs des zeitlichen Verlaufs des Drehmoments des vierten Servomotors (18) mit dem zeitlichen Verlauf des Drehmoments des ersten Servomotors (3) und/oder des zweiten Servomotors (10) und/oder des dritten Servomotors (12) den mindestens einen Betriebsparameter der Teigbearbeitungsmaschine (1) und/oder den mindestens einen Parameter des mit der Teigbearbeitungsmaschine (1) bearbeiteten Teigs (14) berechnet.

4. Verfahren gemäss einem der Ansprüche 1 bis 3, **dadurch gekennzeichnet, dass** die Teigbearbeitungsmaschine (1) über mindestens ein zusätzliches Element zur Bearbeitung von Teig (14) verfügt, welches über mindestens einen zusätzlichen Servomotor angetrieben wird, wobei die Steuerungseinheit (13) das Drehmoment des mindestens einen zusätzlichen Servomotors kontinuierlich misst und anhand des zeitlichen Verlaufs des Drehmoments des mindestens einen zusätzlichen Servomotors oder eines Vergleichs des zeitlichen Verlaufs des Drehmoments des mindestens einen zusätzlichen Servomotors mit dem zeitlichen Verlauf des Drehmoments des ersten Servomotors (3) und/oder zweiten Servomotors (10) sowie allenfalls dritten Servomotors (12) und/oder vierten Servomotors (18) den mindestens einen Betriebsparameter der Teigbearbeitungsmaschine (1) und/oder den mindestens einen Parameter des mit der Teigbearbeitungsmaschine (1) bearbeiteten Teigs (14) berechnet.

5. Verfahren gemäss einem der Ansprüche 1 bis 4, **dadurch gekennzeichnet, dass** die Steuerungseinheit (13) anhand der berechneten mindestens einen Betriebsparameters und/oder anhand des mindestens einen berechneten Parameters des durch die Teigbearbeitungsmaschine (1) bearbeiteten Teigs (14) mindestens einen der Servomotoren (3, 10, 12, 18) der Teigbearbeitungsmaschine (1) ansteuert, um den mindestens einen Betriebsparameter und/oder den mindestens einen Parameters des Teigs (14) zu verändern.

6. Verfahren gemäss einem der Ansprüche 1 bis 5, **dadurch gekennzeichnet, dass** die Steuerungseinheit (13) den zeitlichen Verlauf des gemessenen Drehmoments von einem oder von mehreren der Servomotoren (3, 10, 12, 18) der Teigbearbeitungsmaschine (1) mit mindestens einem in der Steuerungseinheit (13) abgespeicherten Referenzverlauf des Drehmoments vergleicht und anhand von Abweichungen des Verlaufs des gemessenen Drehmoments des einen oder der mehreren Servomotoren (3, 10, 12, 18) mit dem mindestens einen Referenzverlauf des Drehmoments den mindestens einen Betriebsparameter der Teigbearbeitungsmaschine (1) und/oder den mindestens einen Parameter des mit der Teigbearbeitungsmaschine (1) bearbeiteten Teigs (14) berechnet.

7. Verfahren gemäss Anspruch 3, **dadurch gekennzeichnet, dass** das erste Förderband (2) und das zweite Förderband (16) durch den ersten Servomotor (3) und vierten Servomotor (18) in Richtung der mindestens einen Walze (9, 19) angetrieben werden, wobei die Steuerungseinheit (13) durch Vergleich des zeitlichen Verlaufs des Drehmoments des ersten Servomotors (3) sowie des vierten Servomotors (18) als Betriebsparameter berechnet, ob sich ein Teig (14) auf dem ersten Förderband (2) oder auf dem zweiten Förderband (16) befindet.

8. Verfahren gemäss Anspruch 6, **dadurch gekennzeichnet, dass** die Steuerungseinheit (13) anhand des zeitlichen Verlaufs des Drehmoments des ersten Servomotors (3) oder allenfalls des vierten Servomotors (18) mittels Vergleich mit in der Steuerungseinheit (13) abgespeicherten Referenzverläufen das Gewicht eines auf dem ersten Förderband (2) oder allenfalls auf dem zweiten Förderband (16) befindlichen Teigs berechnet.

9. Verfahren gemäss einem der Ansprüche 1 bis 8, **dadurch gekennzeichnet, dass** die Steuerungseinheit (13) anhand des zeitlichen Verlaufs des Drehmoments des zweiten Servomotors (10) als Parameter des Teigs (14) dessen Klebrigkeit berechnet.

10. Teigbearbeitungsmaschine (1), zur Verwendung in einem Verfahrer gemäss einem der Ansprüche 1 bis 9, mit einem ersten Förderband (2) sowie mit einer ersten Walze (9), wobei zwischen der ersten Walze (9) sowie dem ersten Förderband (2) oder einer zweiten Walze (19) ein verstellbarer Walzenspalt (21) gebildet wird, und wobei das erste Förderband (2) durch einen ersten Servomotor (3) sowie die erste Walze (9) und allenfalls die zweite Walze (19) durch einen zweiten Servomotor (10) angetrieben wird, **dadurch gekennzeichnet, dass** die Teigbearbeitungsmaschine (1) eine Steuerungseinheit (13) umfasst, welche derart ausgestaltet ist, dass diese für jeden Servomotor (3, 10) kontinuierlich das Drehmoment misst und anhand des zeitlichen Verlaufs eines gemessenen Drehmoments eines der Servomotoren (3, 10) oder eines Vergleichs des zeitlichen Verlaufs von gemessenen Verläufen von Drehmomenten von zwei oder mehr der Servomotoren (3, 10) mindestens einen Betriebsparameter der Teigbearbeitungsmaschine (1) und/oder mindestens einen Parameter eines mit der Teigbearbeitungsmaschine (1) bearbeiteten Teigs (14) berechnen kann.

11. Teigbearbeitungsmaschine (1) gemäss Anspruch 10, **dadurch gekennzeichnet, dass** die Teigbearbeitungsmaschine (1) über zwei Walzen (3 , 10) verfügt, zwischen denen der Walzenspalt (21) gebildet ist, wobei die beiden Walzen (3, 10) relativ zueinander mittels eines dritten Servomotors (12) linear verfahren werden können, um den Walzenspalt (21) zu verändern und wobei die Steuerungseinheit (13) derart ausgestaltet ist, dass diese den zeitlichen Verlauf des Drehmoments des dritten Servomotors (12) kontinuierlich misst und anhand des zeitlichen Verlaufs des Drehmoments des dritten Servomotors (12) oder eines Vergleichs des zeitlichen Verlaufs des Drehmoments des dritten Servomotors (12) mit dem zeitlichen Verlauf des Drehmoments des ersten Servomotors (3) und/oder zweiten Servomotors (10) den mindestens einen Betriebsparameter der Teigbearbeitungsmaschine (1) und/oder den mindestens einen Parameter des mit der Teigbearbeitungsmaschine (1) bearbeiteten Teigs (14) berechnen kann.

12. Teigbearbeitungsmaschine (1) gemäss Anspruch 11, **dadurch gekennzeichnet, dass** die Teigbearbeitungsmaschine (1) über ein zweites Förderband (16) verfügt, welches von einem vierten Servomotor (18) angetrieben wird, wobei sich das erste Förderband (2) von einem ersten Ende der Teigbearbeitungsmaschine (1) bis zur ersten Walze (9) erstreckt und sich das zweite Förderband (17) von der ersten Walze (9) zu einem zweiten Ende der Teigbearbeitungsmaschine (1) erstreckt, und wobei die Steuerungseinheit (13) derart ausgestaltet ist, dass diese das Drehmoment des vierten Servomotors (18) kontinuierlich messen und anhand des zeitlichen Verlaufs des Drehmoments des vierten Servomotors (18) oder eines Vergleichs des zeitlichen Verlaufs des Drehmoments des vierten Servomotors (18) mit dem zeitlichen Verlauf des Drehmoments des ersten Servomotors (3) und/oder des zweiten Servomotors (10) und/oder des dritten Servomotors (12) den mindestens einen Betriebsparameter der Teigbearbeitungsmaschine (1) und/oder den mindestens einen Parameter des mit der Teigbearbeitungsmaschine (1) bearbeiteten Teigs (14) berechnen kann.

13. Teigbearbeitungsmaschine (1) gemäss einem der Ansprüche 10 bis 12, **dadurch gekennzeichnet, dass** die Teigbearbeitungsmaschine (1) über mindestens ein zusätzliches Element zur Bearbeitung von Teig (14) verfügt, welches über mindestens einen zusätzlichen Servomotor angetrieben wird, wobei die Steuerungseinheit (13) derart ausgestaltet ist, dass diese das Drehmoment des mindestens einen zusätzlichen Servomotors kontinuierlich messen und anhand des zeitlichen Verlaufs des Drehmoments des mindestens einen zusätzlichen Servomotors oder eines Vergleichs des zeitlichen Verlaufs des Drehmoments des mindestens einen zusätzlichen Servomotors mit dem zeitlichen Verlauf des Drehmoments des ersten Servomotors (3) und/oder zweiten Servomotors (10) sowie allenfalls dritten Servomotors (12) und/oder vierten Servomotors (18) den mindestens einen Betriebsparameter der Teigbearbeitungsmaschine (1) und/oder den mindestens einen Parameter des mit der Teigbearbeitungsmaschine (1) bearbeiteten Teigs (14) berechnen kann.

## Claims

1. Method for operating a dough-processing machine (1) which has a first conveyor belt (2) and a first roller (9), wherein an adjustable roller nip (21) is formed between the first roller (9) and the first conveyor belt (2) or a second roller (19), and wherein the first conveyor belt (2) is driven by a first servomotor (3) and the first roller (9) and if need be the second roller (19) is driven by a second servomotor (10), **characterized in that** a control unit (13) for the first servomotor (3) and for the second servomotor (10) continuously measures the torque, and **characterized in that** the control unit (13) calculates at least one operating parameter of the dough-processing machine (1) and/or at least one parameter of a dough (14) processed by the dough-processing machine (1) on the basis of the temporal profile of the measured torque of the first servomotor (3) or of the second servomotor (10) or on the basis of a comparison of the temporal profile of the measured torques of the first servomotor (3) and of the second servomotor (10).

2. Method according to Claim 1, **characterized in that** the dough-processing machine (1) has two rollers (9, 19) between which the roller nip (21) is formed, wherein the two rollers (9, 19) can be moved linearly relative to each other by means of a third servomotor (12) in order to change the roller nip (21), and wherein the control unit (13) continuously measures the temporal profile of the torque of the third servomotor (12) and calculates the at least one operating parameter of the dough-processing machine (1) and/or the at least one parameter of the dough (14) processed by the dough-processing machine (1) on the basis of the temporal profile of the torque of the third servomotor (12) or on the basis of a comparison of the temporal profile of the torque of the third servomotor (12) with the temporal profile of the torque of the first servomotor (3) and/or second servomotor (10).

3. Method according to Claim 2, **characterized in that** the dough-processing machine (1) has a second conveyor belt (16) which is driven by a fourth servomotor (18), wherein the first conveyor belt (2) extends from a first end of the dough-processing machine (1) as far as the first roller (9) and the second conveyor belt (16) extends from the first roller (9) to a second end of the dough-processing machine (1), and wherein the control unit (13) continuously measures the torque of the fourth servomotor (18) and calculates the at least one operating parameter of the dough-processing machine (1) and/or the at least one parameter of the dough (14) processed by the dough-processing machine (1) on the basis of the temporal profile of the torque of the fourth servomotor (18) or on the basis of a comparison of the temporal profile of the torque of the fourth servomotor (18) with the temporal profile of the torque of the first servomotor (3) and/or of the second servomotor (10) and/or of the third servomotor (12).

4. Method according to one of Claims 1 to 3, **characterized in that** the dough-processing machine (1) has at least one additional element for processing dough (14), said element being driven via at least one additional servomotor, wherein the control unit (13) continuously measures the torque of the at least one additional servomotor and calculates the at least one operating parameter of the dough-processing machine (1) and/or the at least one parameter of the dough (14) processed by the dough-processing machine (1) on the basis of the temporal profile of the torque of the at least one additional servomotor or on the basis of a comparison of the temporal profile of the torque of the at least one additional servomotor with the temporal profile of the torque of the first servomotor (3) and/or second servomotor (10) and if need be third servomotor (12) and/or fourth servomotor (18).

5. Method according to one of Claims 1 to 4, **characterized in that** the control unit (13) activates at least one of the servomotors (3, 10, 12, 18) of the dough-processing machine (1) on the basis of the calculated at least one operating parameter and/or on the basis of the at least one calculated parameter of the dough (14) processed by the dough-processing machine (1) in order to change the at least one operating parameter and/or the at least one parameter of the dough (14).

6. Method according to one of Claims 1 to 5, **characterized in that** the control unit (13) compares the temporal profile of the measured torque of one or of more of the servomotors (3, 10, 12, 18) of the dough-processing machine (1) with at least one reference profile of the torque, which is stored in the control unit (13), and calculates the at least one operating parameter of the dough-processing machine (1) and/or the at least one parameter of the dough (14) processed by the dough-processing machine (1) on the basis of deviations of the profile of the measured torque of the one or more servomotors (3, 10, 12, 18) from the at least one reference profile of the torque.

7. Method according to Claim 3, **characterized in that** the first conveyor belt (2) and the second conveyor belt (16) are driven in the direction of the at least one roller (9, 19) by the first servomotor (3) and fourth servomotor (18), wherein the control unit (13) calculates, by comparing the temporal profile of the torque of the first servomotor (3) and of the fourth servomotor (18) as operating parameter, whether a dough (14) is located on the first conveyor belt (2) or on the second conveyor belt (16).

8. Method according to Claim 6, **characterized in that** the control unit (13) calculates the weight of a dough located on the first conveyor belt (2) or if need be on the second conveyor belt (16) on the basis of the temporal profile of the torque of the first servomotor (3) or if need be of the fourth servomotor (18) by means of comparison with reference profiles stored in the control unit (13).

9. Method according to one of Claims 1 to 8, **characterized in that** the control unit (13) calculates the stickiness of the dough (14) on the basis of the temporal profile of the torque of the second servomotor (10) as parameter of the dough (14).

10. Dough-processing machine (1), for use in a method according to one of Claims 1 to 9, with a first conveyor belt (2) and with a first roller (9), wherein an adjustable roller nip (21) is formed between the first roller (9) and the first conveyor belt (2) or a second roller (19), and wherein the first conveyor belt (2) is driven by a first servomotor (3) and the first roller (9) and if need be the second roller (19) is driven by a second servomotor (10), **characterized in that** the dough-processing machine (1) comprises a control unit (13) which is configured in such a manner that it continuously measures the torque for each servomotor (3, 10) and can calculate at least one operating parameter of the dough-processing machine (1) and/or at least one parameter of a dough (14) processed by the dough-processing machine (1) on the basis of the temporal profile of a measured torque of one of the servomotors (3, 10) or on the basis of a comparison of the temporal profile of measured profiles of torques of two or more of the servomotors (3, 10) .

11. Dough-processing machine (1) according to Claim 10, **characterized in that** the dough-processing machine (1) has two rollers (3, 10) between which the roller nip (21) is formed, wherein the two rollers (3, 10) can be moved linearly relative to each other by means of a third servomotor (12) in order to change the roller nip (21), and wherein the control unit (13) is configured in such a manner that it continuously measures the temporal profile of the torque of the third servomotor (12) and can calculate the at least one operating parameter of the dough-processing machine (1) and/or the at least one parameter of the dough (14) processed by the dough-processing machine (1) on the basis of the temporal profile of the torque of the third servomotor (12) or on the basis of a comparison of the temporal profile of the torque of the third servomotor (12) with the temporal profile of the torque of the first servomotor (3) and/or second servomotor (10).

12. Dough-processing machine (1) according to Claim 11, **characterized in that** the dough-processing machine (1) has a second conveyor belt (16) which is driven by a fourth servomotor (18), wherein the first conveyor belt (2) extends from a first end of the dough-processing machine (1) as far as the first roller (9) and the second conveyor belt (17) extends from the first roller (9) to a second end of the dough-processing machine (1), and wherein the control unit (13) is configured in such a manner that it can continuously measure the torque of the fourth servomotor (18) and can calculate the at least one operating parameter of the dough-processing machine (1) and/or the at least one parameter of the dough (14) processed by the dough-processing machine (1) on the basis of the temporal profile of the torque of the fourth servomotor (18) or on the basis of a comparison of the temporal profile of the torque of the fourth servomotor (18) with the temporal profile of the torque of the first servomotor (3) and/or of the second servomotor (10) and/or of the third servomotor (12).

13. Dough-processing machine (1) according to one of Claims 10 to 12, **characterized in that** the dough-processing machine (1) has at least one additional element for processing dough (14), said element being driven via at least one additional servomotor, wherein the control unit (13) is configured in such a manner that it can continuously measure the torque of the at least one additional servomotor and can calculate the at least one operating parameter of the dough-processing machine (1) and/or the at least one parameter of the dough (14) processed by the dough-processing machine (1) on the basis of the temporal profile of the torque of the at least one additional servomotor or on the basis of a comparison of the temporal profile of the torque of the at least one additional servomotor with the temporal profile of the torque of the first servomotor (3) and/or second servomotor (10) and if need be third servomotor (12) and/or fourth servomotor (18).

## Revendications

1. Procédé de fonctionnement d'une machine de traitement de la pâte (1), laquelle possède une première bande transporteuse (2) ainsi qu'un premier cylindre (9), un espace entre cylindres (21) réglable étant formé entre le premier cylindre (9) et la première bande transporteuse (2) ou un deuxième cylindre (19), et la première bande transporteuse (2) étant entraînée par un premier servomoteur (3) et le premier cylindre (9) et éventuellement le deuxième cylindre (19) étant entraînés par un deuxième servomoteur (10), **caractérisé en ce qu'**une unité de commande (13) pour le premier servomoteur (3) et pour le deuxième servomoteur (10) mesure en continu le couple, et **caractérisé en ce que** l'unité de commande (13), sur la base de l'allure temporelle du couple mesuré du premier servomoteur (3) ou du deuxième servomoteur (10) ou d'une comparaison de l'allure temporelle du couple mesuré du premier servomoteur (3) et du deuxième servomoteur (10), calcule au moins un paramètre de fonctionnement de la machine de traitement de la pâte (1) et/ou au moins un paramètre d'une pâte (14) traitée à l'aide de la machine de traitement de la pâte (1).

2. Procédé selon la revendication 1, **caractérisé en ce que** la machine de traitement de la pâte (1) possède deux cylindres (9, 19), entre lesquels l'espace entre cylindres (21) est formé, les deux cylindres (9, 19) pouvant être déplacés linéairement l'un par rapport à l'autre au moyen d'un troisième servomoteur (12), afin de modifier l'espace entre cylindres (21) et l'unité de commande (13) mesurant en continu l'allure temporelle du couple du troisième servomoteur (12) et, sur la base de l'allure temporelle du couple du troisième servomoteur (12) ou d'une comparaison de l'allure temporelle du couple du troisième servomoteur (12) avec l'allure temporelle du couple du premier servomoteur (3) et/ou du deuxième servomoteur (10), calcule l'au moins un paramètre de fonctionnement de la machine de traitement de la pâte (1) et/ou l'au moins un paramètre de la pâte (14) traitée à l'aide de la machine de traitement de la pâte (1).

3. Procédé selon la revendication 2, **caractérisé en ce que** la machine de traitement de la pâte (1) possède une deuxième bande transporteuse (16), laquelle est entraînée par un quatrième servomoteur (18), la première bande transporteuse (2) s'étendant à partir d'une première extrémité de la machine de traitement de la pâte (1) jusqu'au premier cylindre (9) et la deuxième bande transporteuse (16) s'étendant à partir du premier cylindre (9) jusqu'à une deuxième extrémité de la machine de traitement de la pâte (1), et l'unité de commande (13) mesurant en continu le couple du quatrième servomoteur (18) et, sur la base de l'allure temporelle du couple du quatrième servomoteur (18) ou d'une comparaison de l'allure temporelle du couple du quatrième servomoteur (18) avec l'allure temporelle du couple du premier servomoteur (3) et/ou du deuxième servomoteur (10) et/ou du troisième servomoteur (12), calcule l'au moins un paramètre de fonctionnement de la machine de traitement de la pâte (1) et/ou l'au moins un paramètre de la pâte (14) traitée à l'aide de la machine de traitement de la pâte (1).

4. Procédé selon l'une des revendications 1 à 3, **caractérisé en ce que** la machine de traitement de la pâte (1) possède au moins un élément supplémentaire servant au traitement de la pâte (14), lequel est entraîné par au moins un servomoteur supplémentaire, l'unité de commande (13) mesurant en continu le couple de l'au moins un servomoteur supplémentaire et, sur la base de l'allure temporelle du couple de l'au moins un servomoteur supplémentaire ou d'une comparaison de l'allure temporelle du couple de l'au moins un servomoteur supplémentaire avec l'allure temporelle du couple du premier servomoteur (3) et/ou du deuxième servomoteur (10) et éventuellement du troisième servomoteur (12) et/ou du quatrième servomoteur (18), calcule l'au moins un paramètre de fonctionnement de la machine de traitement de la pâte (1) et/ou l'au moins un paramètre de la pâte (14) traitée à l'aide de la machine de traitement de la pâte (1).

5. Procédé selon l'une des revendications 1 à 4, **caractérisé en ce que** l'unité de commande (13) commande, sur la base de l'au moins un paramètre de fonctionnement calculé et/ou sur la base de l'au moins un paramètre calculé de la pâte (14) traitée par la machine de traitement de la pâte (1), au moins l'un des servomoteurs (3, 10, 12, 18) de la machine de traitement de la pâte (1), afin de modifier l'au moins un paramètre de fonctionnement et/ou l'au moins un paramètre de la pâte (14) .

6. Procédé selon l'une des revendications 1 à 5, **caractérisé en ce que** l'unité de commande (13) compare l'allure temporelle du couple mesuré par un ou par plusieurs des servomoteurs (3, 10, 12, 18) de la machine de traitement de la pâte (1) avec au moins une allure de référence, enregistrée dans l'unité de commande (13), du couple et, sur la base d'écarts de l'allure du couple mesuré du ou des plusieurs servomoteurs (3, 10, 12, 18) par rapport à l'au moins une allure de référence du couple, calcule l'au moins un paramètre de fonctionnement de la machine de traitement de la pâte (1) et/ou l'au moins un paramètre de la pâte (14) traitée à l'aide de la machine de traitement de la pâte (1).

7. Procédé selon la revendication 3, **caractérisé en ce que** la première bande transporteuse (2) et la deuxième bande transporteuse (16) sont entraînées par le premier servomoteur (3) et le quatrième servomoteur (18) en direction de l'au moins un cylindre (9, 19), l'unité de commande (13) calculant, par comparaison de l'allure temporelle du couple du premier servomoteur (3) et du quatrième servomoteur (18), comme paramètre de fonctionnement, si une pâte (14) se trouve sur la première bande transporteuse (2) ou sur la deuxième bande transporteuse (16).

8. Procédé selon la revendication 6, **caractérisé en ce que** l'unité de commande (13) calcule, sur la base de l'allure temporelle du couple du premier servomoteur (3) ou éventuellement du quatrième servomoteur (18) grâce à une comparaison avec des allures de référence enregistrées dans l'unité de commande (13), le poids d'une pâte se trouvant sur la première bande transporteuse (2) ou éventuellement sur la deuxième bande transporteuse (16).

9. Procédé selon l'une des revendications 1 à 8, **caractérisé en ce que** l'unité de commande (13) calcule, sur la base de l'allure temporelle du couple du deuxième servomoteur (10), comme paramètre de la pâte (14), sa viscosité.

10. Machine de traitement de la pâte (1), destinée à être utilisée dans un procédé selon l'une des revendications 1 à 9, comportant une première bande transporteuse (2) ainsi qu'un premier cylindre (9), un espace entre cylindres (21) réglable étant formé entre le premier cylindre (9) et la première bande transporteuse (2) ou un deuxième cylindre (19), et la première bande transporteuse (2) étant entraînée par un premier servomoteur (3) et le premier cylindre (9) et éventuellement le deuxième cylindre (19) étant entraînés par un deuxième servomoteur (10), **caractérisée en ce que** la machine de traitement de la pâte (1) comprend une unité de commande (13), laquelle est configurée de telle sorte que celle-ci mesure en continu le couple pour chaque servomoteur (3, 10) et, sur la base de l'allure temporelle d'un couple mesuré de l'un des servomoteurs (3, 10) ou d'une comparaison de l'allure temporelle d'allures mesurées de couples de deux ou plus des servomoteurs (3, 10), peut calculer au moins un paramètre de fonctionnement de la machine de traitement de la pâte (1) et/ou au moins un paramètre d'une pâte (14) traitée à l'aide de la machine de traitement de la pâte (1).

11. Machine de traitement de la pâte (1) selon la revendication 10, **caractérisée en ce que** la machine de traitement de la pâte (1) possède deux cylindres (3, 10), entre lesquels l'espace entre cylindres (21) est formé, les deux cylindres (3, 10) pouvant être déplacés linéairement l'un par rapport à l'autre au moyen d'un troisième servomoteur (12), afin de modifier l'espace entre cylindres (21) et l'unité de commande (13) étant configurée de telle sorte que celle-ci mesure en continu l'allure temporelle du couple du troisième servomoteur (12) et, sur la base de l'allure temporelle du couple du troisième servomoteur (12) ou d'une comparaison de l'allure temporelle du couple du troisième servomoteur (12) avec l'allure temporelle du couple du premier servomoteur (3) et/ou du deuxième servomoteur (10), peut calculer l'au moins un paramètre de fonctionnement de la machine de traitement de la pâte (1) et/ou l'au moins un paramètre de la pâte (14) traitée à l'aide de la machine de traitement de la pâte (1).

12. Machine de traitement de la pâte (1) selon la revendication 11, **caractérisée en ce que** la machine de traitement de la pâte (1) possède une deuxième bande transporteuse (16), laquelle est entraînée par un quatrième servomoteur (18), la première bande transporteuse (2) s'étendant à partir d'une première extrémité de la machine de traitement de la pâte (1) jusqu'au premier cylindre (9) et la deuxième bande transporteuse (16) s'étendant à partir du premier cylindre (9) jusqu'à une deuxième extrémité de la machine de traitement de la pâte (1), et l'unité de commande (13) étant configurée de telle sorte que celle-ci mesure en continu le couple du quatrième servomoteur (18) et, sur la base de l'allure temporelle du couple du quatrième servomoteur (18) ou d'une comparaison de l'allure temporelle du couple du quatrième servomoteur (18) avec l'allure temporelle du couple du premier servomoteur (3) et/ou du deuxième servomoteur (10) et/ou du troisième servomoteur (12), peut calculer l'au moins un paramètre de fonctionnement de la machine de traitement de la pâte (1) et/ou l'au moins un paramètre de la pâte (14) traitée à l'aide de la machine de traitement de la pâte (1).

13. Machine de traitement de la pâte (1) selon l'une des revendications 10 à 12, **caractérisée en ce que** la machine de traitement de la pâte (1) possède au moins un élément supplémentaire servant au traitement de la pâte (14), lequel est entraîné par au moins un servomoteur supplémentaire, l'unité de commande (13) étant configurée de telle sorte que celle-ci mesure en continu le couple de l'au moins un servomoteur supplémentaire et, sur la base de l'allure temporelle du couple de l'au moins un servomoteur supplémentaire ou d'une comparaison de l'allure temporelle du couple de l'au moins un servomoteur supplémentaire avec l'allure temporelle du couple du premier servomoteur (3) et/ou du deuxième servomoteur (10) et éventuellement du troisième servomoteur (12) et/ou du quatrième servomoteur (18), peut calculer l'au moins un paramètre de fonctionnement de la machine de traitement de la pâte (1) et/ou l'au moins un paramètre de la pâte (14) traitée à l'aide de la machine de traitement de la pâte (1).
